# EUROPÄISCHE PATENTSCHRIFT

(11) **EP 4 144 940 B1**
(45) Veröffentlichungstag und Bekanntmachung des Hinweises auf die Patenterteilung: **29.04.2026**
(21) Anmeldenummer: 22185026.6
(22) Anmeldetag: 14.07.2022
(51) Int. Cl.: E05B 47/06, E05B 55/12, E05C 1/12, B62H 5/00, E05B 1/00, E05B 47/00, E05B 55/06, E05B 71/00

(54) **SCHLOSS**
LOCK
SERRURE

(30) Priorität: 02.09.2021 DE 102021122786
(43) Veröffentlichungstag der Anmeldung: 08.03.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 3 130 729
- AT-B- 349 929
- CN-A- 113 027 237
- DE-A1- 102008 014 488
- DE-A1- 102019 113 163
- DE-U1- 202019 005 536
- US-A1- 2018 298 640
- US-B2- 9 784 017

## Beschreibung

Die Erfindung betrifft ein Schloss mit einem Verriegelungsmechanismus, welcher einen Riegel aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist.

Derartige Schlösser sind grundsätzlich bekannt und kommen beispielsweise zum Einsatz, um einen Energiespeicher an einem Elektrofahrrad oder einem anderen Elektrofahrzeug zu sichern, oder um eine Transportbox oder ein Rahmenschloss des Elektrofahrzeugs zu verriegeln. Üblicherweise wird der Riegel des Schlosses durch ein vergleichsweise starkes Federelement in die Verriegelungsposition gedrängt, aus der er mittels eines Betätigungselements in eine Entriegelungsposition bewegt werden kann. Dabei besteht die Gefahr, dass starke Erschütterungen, z.B. bei Fahrt über holpriges Gelände oder bei Sprüngen, eine unbeabsichtigte Bewegung des Riegels gegen die Federkraft des Federelements in die Entriegelungsposition verursachen, wodurch beispielsweise ein durch das Schloss gesicherter Energiespeicher verloren gehen kann. Zudem besteht in ähnlicher Weise die Gefahr unberechtigter Zugriffe auf das Schloss, indem durch eine Einwirkung auf das Betätigungselement mit erhöhter Kraft eine starke Beschleunigung erzeugt und somit eine Bewegung des Riegels in die Entriegelungsposition erzwungen werden kann.

Ein Türschloss, genauer gesagt ein Fallenriegelschloss, mit den Merkmalen des Oberbegriffs des Anspruchs 1 ist in der AT 349 929 B offenbart. Ein weiteres Türschloss ist aus der DE 10 2008 014 488 A1 bekannt.

Der Erfindung liegt die Aufgabe zugrunde, ein Schloss der eingangs beschriebenen Art zu schaffen, das sich durch eine erhöhte Sicherheit und einen hohen Bedienkomfort auszeichnet.

Die Aufgabe wird durch ein Schloss mit den Merkmalen des Anspruchs 1 gelöst. Das erfindungsgemäße Schloss weist neben dem Verriegelungsmechanismus ein Betätigungselement zur manuellen Bewegung des Riegels in die Entriegelungsposition auf. Zudem umfasst das Schloss ein Koppelelement, welches zwischen einem Kopplungszustand, in welchem es mit dem Riegel gekoppelt ist, und einem Entkopplungszustand, in welchem es relativ zu dem Riegel bewegbar ist, überführbar und mittels des Betätigungselements von einer Passivposition in eine Aktivposition bewegbar ist. Der Riegel ist durch eine Bewegung von der Passivposition in die Aktivposition des im Kopplungszustand befindlichen Koppelelements durch das Betätigungselement in die Entriegelungsposition bewegbar.

Erfindungsgemäß ist die Bewegungsrichtung des Betätigungselements zumindest im Wesentlichen senkrecht zu einer Bewegungsrichtung des Riegels orientiert.

Das bewegbare Gegenstück des Schlosses kann beispielsweise ein Energiespeicher oder Bestandteil eines Energiespeichers oder ein Kloben eines Rahmenschlosses oder Bremsscheibenschlosses oder ein Schließbügel oder eine Klinke eines Schlosses einer Transportbox jeweils eines Fahrzeugs oder Elektrofahrzeugs, insbesondere eines Elektrofahrrads, sein. Das Schloss kann auch bei einem anderen Fahrzeug oder Elektrofahrzeug, insbesondere einem elektrischen Rollstuhl, Elektroroller oder Elektrokart, ebenso wie bei einem mit Muskelkraft betriebenen Fahrzeug eingesetzt werden. Das erfindungsgemäße Schloss kann auch zur Verriegelung von Türen oder Fenstern, beispielsweise auch eines Caravans oder Wohnmobils, vorgesehen sein, ebenso zur Verriegelung von Schranktüren oder Schubladen oder von Transportkisten oder Containern. Grundsätzlich kann ein beliebiges mechanisches Schloss durch das erfindungsgemäße Schloss ersetzt werden.

Der Riegel kann in seiner Verriegelungsposition in eine Aussparung des Gegenstücks eingreifen oder dieses hintergreifen, um ein Entfernen des Gegenstücks aus dem Verriegelungsmechanismus zu verhindern. Umgekehrt kann der Riegel selbst eine Aussparung aufweisen, in die in der Verriegelungsposition eine entsprechende Struktur des Gegenstücks oder des Energiespeichers eingreifen kann. Ist das Schloss zur Sicherung eines Energiespeichers vorgesehen, so kann der Riegel in seiner Verriegelungsposition in eine Aussparung des Energiespeichers eingreifen oder einen Vorsprung des Energiespeichers derart hintergreifen, dass die Entnahme des Energiespeichers blockiert ist.

Die Erfindung sieht vor, dass das Betätigungselement nicht direkt auf den Riegel einwirkt, um diesen von der Verriegelungsposition in die Entriegelungsposition zu bewegen. Stattdessen wirkt das Betätigungselement mit einem Koppelelement zusammen, welches durch das Betätigungselement von einer Passivposition in eine Aktivposition überführt werden kann.

In einem Kopplungszustand ist das Koppelement derart mit dem Riegel gekoppelt, dass eine Bewegung des Koppelelements auf den Riegel übertragen wird. Dabei kann eine starre Kopplung vorgesehen sein, sodass das Koppelelement den Riegel nach Art eines Mitnehmers unmittelbar mitbewegt, insbesondere linear, wobei eine Überführung des Koppelelements von der Passivposition in die Aktivposition eine Bewegung des Riegels aus der Verriegelungsposition in die Entriegelungsposition bewirkt. Grundsätzlich kann auch vorgesehen sein, dass umgekehrt die Bewegung des Riegels in die Verriegelungsposition durch das Betätigungselement und eine Bewegung des Koppelelements von der Aktivposition in die Passivposition bewirkt wird.

In dem Entkopplungszustand ist das Koppelelement von dem Riegel entkoppelt, sodass eine Bewegung des Koppelelements unabhängig von einer Bewegung des Riegels erfolgen kann, und umgekehrt. Das Betätigungselement und das Koppelelement können auch in dem Entkopplungszustand miteinander in Eingriff stehen, sodass eine Betätigung des Betätigungselements eine Bewegung des Koppelelements von dem Passivzustand in den Aktivzustand bewirkt. Dabei wird der Riegel jedoch nicht in die Entriegelungsposition mitgenommen. Ein Entriegeln des Schlosses durch das Betätigungselement ist daher nur in dem Kopplungszustand möglich.

Bei dem erfindungsgemäßen Schloss kann eine Bewegung des Betätigungselements von einer Bewegung des Riegels in die Entriegelungsposition entkoppelt werden. In dem Entkopplungszustand bleibt daher selbst eine vehemente Betätigung oder Manipulation des Betätigungselements ohne Auswirkung auf den Riegel, wodurch eine unberechtigte Entriegelung des Schlosses deutlich erschwert und die Sicherheit des Schlosses erhöht wird.

Das Betätigungselement kann eine Handhabe zur schlüssellosen Betätigung aufweisen, wodurch ein hoher Bedienkomfort erzielt wird. Die Handhabe kann einen Druckknopf, einen Schieber oder ein Zugelement zur Übertragung einer linearen, insbesondere drückenden oder ziehenden, Betätigungsbewegung auf das Koppelelement umfassen. Die Handhabe kann einen Drehknopf oder Drehgriff, welche durch eine rotatorische Betätigungsbewegung bedienbar sind, oder einen Hebel umfassen. Die Bewegung des Riegels durch das Betätigungselement kann insbesondere lediglich durch eine manuelle Betätigung durch einen Nutzer erfolgen, ohne dass eine elektromotorische Bewegung des Riegels vorgesehen ist. Grundsätzlich kann das Betätigungselement einen Schließzylinder und einen zugehörigen Schlüssel umfassen.

Vorteilhafte Ausführungsformen der Erfindung sind in den Unteransprüchen, der Beschreibung und der Zeichnung wiedergegeben.

Gemäß einer Ausführungsform ist das Koppelelement parallel zu dem Riegel bewegbar angeordnet. Insbesondere können das Koppelelement und der Riegel eine gemeinsame Längsachse aufweisen, entlang derer sie jeweils bewegbar angeordnet sind.

Die Bewegungsrichtung des Betätigungselements kann zumindest im Wesentlichen senkrecht zu einer Bewegungsrichtung des Koppelelements orientiert sein. Um eine Betätigungsbewegung von dem Betätigungselement auf das Koppelelement zu übertragen, können diese jeweils korrespondierende Übertragungsmerkmale aufweisen. Beispielsweise können das Betätigungselement und das Koppelelement zusammenwirkende Steuerschrägen aufweisen, durch welche eine Betätigungsbewegung des Betätigungselements in eine zumindest im Wesentlichen senkrecht dazu orientierte Bewegung des Riegels umgewandelt wird. Es kann auch eine Kulissenführung, eine Schubstange, eine gelenkige Verbindung oder eine andere Getriebeverbindung vorgesehen sein.

Der Riegel kann einen Führungsabschnitt aufweisen, in welchem das Koppelelement geführt ist. Der Führungsabschnitt kann als Aussparung in dem Riegel ausgebildet sein, beispielsweise als Führungsschacht. Das Koppelelement kann gleitend in dem Führungsabschnitt geführt sein.

Gemäß einer Ausführungsform umfasst das Schloss ein Steuerelement zum wahlweisen Überführen des Koppelelements in den Kopplungszustand oder Entkopplungszustand. Das Steuerelement kann zu diesem Zweck selbst bewegbar angeordnet sein. Insbesondere kann das Überführen des Koppelelements zwischen dem Kopplungszustand und dem Entkopplungszustand eine Translationsbewegung, insbesondere eine Linearbewegung, und/oder eine Rotationsbewegung des Steuerelements umfassen.

Der Riegel und das Koppelelement können in dem Kopplungszustand durch das Steuerelement gekoppelt sein. Das Steuerelement kann in dem Kopplungszustand zumindest abschnittsweise mit dem Riegel und dem Koppelelement diese miteinander koppelnd in Eingriff stehen.

Gemäß einer Ausführungsform ist das Steuerelement als Steuergabel ausgebildet, welche den Riegel an drei Seiten umgreift. Durch einen durch die Steuergabel definierten umgriffenen Bereich der Steuergabel kann sich zumindest teilweise der Riegel entlang seiner Bewegungsrichtung erstrecken.

Alternativ oder zusätzlich kann das Steuerelement zumindest einen Kopplungsbolzen zur Kopplung des Riegels und des Koppelelements aufweisen, insbesondere dessen Längsachse sich senkrecht zu einer Bewegungsrichtung des Riegels erstreckt. Der zumindest eine Kopplungsbolzen kann derart ausgebildet sein, dass er in dem Kopplungszustand mit dem Riegel und dem Koppelelement diese koppelnd in Eingriff bringbar ist und dass er in dem Entkopplungszustand entweder nur mit dem Riegel oder nur mit dem Koppelelement oder mit keinem der beiden in Eingriff bringbar ist, um diese nicht miteinander zu koppeln. Zum Überführen zwischen diesen beiden Zuständen kann der Kopplungsbolzen bewegbar angeordnet sein. Das Überführen zwischen dem Kopplungszustand und dem Entkopplungszustand kann eine Rotations- und/oder Translationsbewegung des Kopplungsbolzens, insbesondere eine Linearbewegung des Kopplungsbolzens entlang seiner Längsachse, umfassen. Es können mehrere Kopplungsbolzen vorgesehen sein. Der Kopplungsbolzen kann sich zumindest abschnittsweise senkrecht zu zinkenartigen Abschnitten der Steuergabel erstrecken.

Das Koppelelement und der Riegel können jeweils zumindest eine Aussparung zur Aufnahme eines Kopplungsabschnitts des Steuerelements aufweisen, insbesondere zur Aufnahme eines Kopplungsbolzens. Der Riegel und/oder das Koppelelement können jeweils mehrere Aussparungen aufweisen, in welche Abschnitte des Steuerelements gleichzeitig oder jeweils nur in dem Kopplungszustand oder nur in dem Entkopplungszustand eingreifen.

Das Steuerelement und der Riegel können beweglich miteinander verbunden sein. Insbesondere kann eine solche bewegliche Verbindung sowohl in dem Kopplungszustand als auch in dem Entkopplungszustand und unabhängig von der Entriegelungsposition oder Verriegelungsposition des Riegels bestehen. Der Riegel und das Steuerelement können an mehr als einer Verbindungsstelle miteinander verbindbar sein. Beispielsweise kann unabhängig von der Position des Riegels oder dem Kopplungszustand zu jedem Zeitpunkt zumindest an einer Verbindungsstelle der Riegel mit dem Steuerelement verbunden sein.

Eine Bewegung des Riegels aus der Verriegelungsposition in die Entriegelungsposition kann eine Rotationsbewegung und/oder eine Translationsbewegung des Steuerelements bewirken. Das Steuerelement kann durch den Riegel mitgenommen werden ohne selbst zu der Rotations- und/oder Translationsbewegung angetrieben zu werden. Insbesondere kann das Steuerelement durch den Riegel um einen Aufhängepunkt verschwenkt werden.

Gemäß einer Ausführungsform weist das Schloss ein Sperrelement auf, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Das Sperrelement kann insbesondere als Stift oder Zapfen ausgebildet sein. Das Sperrelement kann zur Sperrung des Riegels grundsätzlich mit einem beliebigen beweglichen Element des Schlosses zusammenwirken, bevorzugt jedoch mit dem Riegel selbst.

In der Sperrstellung sichert der Verriegelungsmechanismus mittels des Riegels also unmittelbar das Gegenstück in dem Schloss, und zudem blockiert das Sperrelement den Verriegelungsmechanismus, sodass eine Betätigung desselben erst nach Verstellen des Sperrelements in die Freigabestellung möglich ist. Um das Schloss zu entriegeln sind daher insgesamt zwei Freigabeschritte erforderlich. Ein versehentliches Bewegen des Riegels in die Entriegelungsposition, beispielsweise bei einer Fahrt über unebenes Gelände oder durch gewaltsame Einwirkung auf das Schloss, werden durch das Sperrelement in der Sperrstellung besonders wirksam verhindert, sodass die Sicherheit des Schlosses erhöht wird.

Ein Verstellen des Sperrelements zwischen der Sperrstellung und der Freigabestellung kann eine Rotations- und/oder Translationsbewegung des Sperrelements umfassen. Beispielsweise kann das Verstellen des Sperrelements ein Verschwenken, Verdrehen, Verschieben des Sperrelements oder eine Kombination davon umfassen, insbesondere eine Linearbewegung entlang einer Längsachse des Sperrelements.

Gemäß einer Ausführungsform ist das Sperrelement an dem Steuerelement ausgebildet. Eine Längsachse des Sperrelements kann parallel oder koaxial mit einer Längsachse des Steuerelements, insbesondere eines Kopplungsbolzens, angeordnet sein. Das Steuerelement kann somit sowohl eine Überführung des Koppelelements in den Kopplungszustand oder Entkopplungszustand als auch eine Verstellung des Sperrelements zwischen der Sperrstellung und der Freigabestellung steuern, wobei beide Vorgänge gleichzeitig erfolgen können.

Es kann grundsätzlich vorgesehen sein, dass mit der Überführung des Koppelelements in den Entkopplungszustand das Sperrelement in seine Sperrstellung überführt wird, so dass ein manuelles Bewegen des Riegels durch das Betätigungselement verhindert wird und zusätzlich durch das in der Sperrstellung befindliche Sperrelement ein versehentliches oder gewaltsames Bewegen des Riegels in die Entriegelungsposition ausgeschlossen ist. In vergleichbarer Weise kann vorgesehen sein, dass mit der Überführung des Koppelelements in den Kopplungszustand, in dem eine Bewegung des Riegels durch das Betätigungselement möglich ist, auch das Sperrelement in seine Freigabestellung verstellt wird, um die Bewegung des Riegels in seine Entriegelungsposition zu ermöglichen.

Gemäß einer Ausführungsform steht das Sperrelement in seiner Sperrstellung mit einer Komponente des Schlosses in Eingriff, insbesondere mit einer nicht beweglichen Komponente, wie beispielsweise einem Gehäuse, des Schlosses. Die Komponente des Schlosses kann dazu ausgebildet sein, eine Bewegung des Sperrelements entlang der Bewegungsrichtung des Riegels zu verhindern. Grundsätzlich kann zur Sicherung des Sperrelements in seiner Sperrstellung eine bewegliche Komponente des Schlosses vorgesehen sein. An der beweglichen oder nicht beweglichen Komponente des Schlosses, insbesondere an dem Gehäuse des Schlosses, kann eine entsprechende Aufnahme für das Sperrelement vorgesehen sein, welche eine Bewegung des Sperrelements, insbesondere in Bewegungsrichtung des Riegels, blockiert.

Der Riegel kann entgegen einer Rückstellkraft einer Feder aus der Verriegelungsposition in die Entriegelungsposition bringbar sein. Alternativ oder zusätzlich kann das Koppelelement entgegen der Rückstellkraft einer Feder aus der Passivposition in die Aktivposition bringbar sein. So ist sichergestellt, dass der Riegel in dem Kopplungszustand und in dem Entkopplungszustand grundsätzlich in seine Verriegelungsposition gedrängt wird. Die Gefahr einer versehentlichen Freigabe des Gegenstücks aus dem Verriegelungsmechanismus wird hierdurch verringert. Zudem kann durch die Feder eine Fallenfunktion realisiert werden, die ein automatisches Einrasten des Gegenstücks, beispielsweise eines Energiespeichers, in dem Verriegelungsmechanismus ermöglicht, wobei nach dem Einrasten der Riegel durch die Feder automatisch in die Verriegelungsposition bewegt wird.

Der Riegel und das Koppelelement können entgegen der Rückstellkraft derselben Feder in die Entriegelungsposition bzw. in die Aktivposition bringbar sein. Hierdurch ist sichergestellt, dass das Koppelelement und der Riegel in dem Entkopplungszustand und insbesondere in der Passivposition des Koppelelements stets korrekt relativ zueinander ausgerichtet sind und insbesondere dass zum Eingreifen des Steuerelements vorgesehene Aussparungen des Riegels und des Koppelelements so miteinander ausgerichtet sind, insbesondere fluchtend, dass das Steuerelement zur Überführung in den Kopplungszustand darin eingreifen kann.

Gemäß einer Ausführungsform weist das Schloss zumindest einen Aktor zur Überführung des Koppelelements zwischen dem Kopplungszustand und dem Entkopplungszustand auf. Alternativ oder zusätzlich weist das Schloss zumindest einen Aktor zur Verstellung des Sperrelements zwischen seiner Sperrstellung und seiner Freigabestellung auf. Es kann derselbe Aktor zu Überführung des Koppelelements und des Sperrelements vorgesehen sein, insbesondere wobei die Überführung des Koppelelements und des Sperrelements gleichzeitig erfolgen kann. Bei dem Aktor kann es sich um einen elektromotorischen oder elektromagnetischen Aktor handeln. Eine manuelle Überführung des Sperrelements in eine Sperrstellung oder Freigabestellung oder des Koppelelements in einen Kopplungszustand oder Entkopplungszustand durch einen Nutzer des Schlosses ist somit entbehrlich, wodurch sich der Bedienkomfort erhöht. Da durch den Aktor lediglich das Sperrelement und/oder das Koppelelement betätigt werden, nicht aber der Riegel, kann ein Aktor mit geringerer Leistung und/oder kompakteren Abmessungen verwendet werden.

Es kann vorgesehen sein, dass das Schloss eine Empfangseinheit zum Empfangen eines drahtgebunden oder drahtlos, insbesondere durch ein Mobiltelefon, übermittelten Freigabesignals aufweist, wobei das Freigabesignal die Anweisung zur Überführung des Koppelelements in den Kopplungszustand oder Entkopplungszustand und/oder die Anweisung zur Verstellung des Sperrelements in die Freigabestellung oder Sperrstellung enthalten kann. Eine schlüssellose Betätigung des Schlosses kann umfassen, dass nach einer elektrischen Überführung des Koppelelements in den Kopplungszustand und einer elektrischen Verstellung des Sperrelements in die Freigabestellung eine manuelle Bewegung des Riegels mittels des Betätigungselements in die Entriegelungsposition erfolgen kann.

Insbesondere kann das Schloss zumindest einen Aktor, insbesondere einen elektromotorischen oder elektromagnetischen Aktor, zur Betätigung des Steuerelements umfassen. Das Steuerelement kann durch den Aktor rotatorisch und/oder translatorisch bewegt, insbesondere verschwenkt oder verschoben werden, um somit eine Überführung des Koppelelements und/oder eine Verstellung des Sperrelements zu bewirken.

Um den Benutzer auf eine fehlerhafte, insbesondere nicht vollständige, Verriegelung des Schlosses aufmerksam zu machen, kann das Schloss ferner ein Detektionsmittel zur Detektion der Einnahme der Verriegelungsposition durch den Riegel umfassen. Durch das Detektionsmittel lässt sich überwachen, ob der Riegel bei einem Verriegelungsvorgang tatsächlich seine Verriegelungsposition erreicht oder ob er beispielsweise durch einen nicht korrekt eingesetzten Energiespeicher daran gehindert wird. Im letzteren Fall lässt sich eine geeignete Warnung an den Benutzer ausgeben, beispielsweise in Form einer an einem Bordcomputer eines Elektrofahrrads, an einem Mobiltelefon des Benutzers und/oder an dem Schloss selbst erzeugten optischen und/oder akustischen Rückmeldung.

Das Detektionsmittel kann beispielsweise einen Aktor, insbesondere einen elektromotorischen oder elektromagnetischen Aktor, zur Verstellung eines Sperrelements umfassen, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Insbesondere kann es sich bei dem Aktor um denselben Aktor handeln, welcher auch zur Bewegung des Steuerelements vorgesehen ist.

Nachfolgend wird die Erfindung rein beispielhaft anhand einer möglichen Ausführungsform unter Bezugnahme auf die beigefügte Zeichnung beschrieben. Es zeigen:
- Fig. 1: eine perspektivische Vorderansicht eines erfindungsgemäßen Schlosses mit einem in einem Entkopplungszustand befindlichen Koppelelement;
- Fig. 2: eine weitere perspektivische Vorderansicht des Schlosses von Fig. 1;
- Fig. 3: eine perspektivische Rückansicht des Schlosses von Fig. 1;
- Fig. 4: eine weitere perspektivische Rückansicht des Schlosses von Fig. 1;
- Fig. 5: eine Draufsicht auf das Schloss von Fig. 1;
- Fig. 6: eine Rückansicht des Schlosses von Fig. 1;
- Fig. 7: eine Seitenansicht des Schlosses von Fig. 1;
- Fig. 8: eine Schnittansicht des Schlosses von Fig. 1 entlang einer Ebene, die durch eine Bewegungsrichtung eines Riegels und eine Betätigungsrichtung eines Betätigungselements definiert ist;
- Fig. 9: eine weitere Schnittansicht des Schlosses von Fig. 1 entlang einer Ebene, welche durch die Bewegungsrichtung des Riegels und eine Längsachse eines Kopplungsbolzens definiert ist;
- Fig. 10: eine Explosionsansicht des Schlosses von Fig. 1;
- Fig. 11A: eine perspektivische Ansicht eines Riegels des Schlosses von Fig. 1;
- Fig. 11B: eine weitere perspektivische Ansicht des Riegels von Fig. 11A;
- Fig. 12: eine perspektivische Ansicht des Koppelelements von Fig. 1;
- Fig. 13A: eine perspektivische Ansicht eines Steuerelements des Schlosses von Fig. 1;
- Fig. 13B: eine Draufsicht auf das Steuerelement von Fig. 13A;
- Fig. 14: das Schloss von Fig. 1 mit im Entkopplungszustand befindlichem Koppelelement, wobei das Koppelelement in die Aktivposition überführt ist;
- Fig. 15.: das Schloss von Fig. 1 mit im Kopplungszustand befindlichem Koppelelement, wobei das Koppelelement in die Aktivposition und der Riegel in die Entriegelungsposition überführt ist.

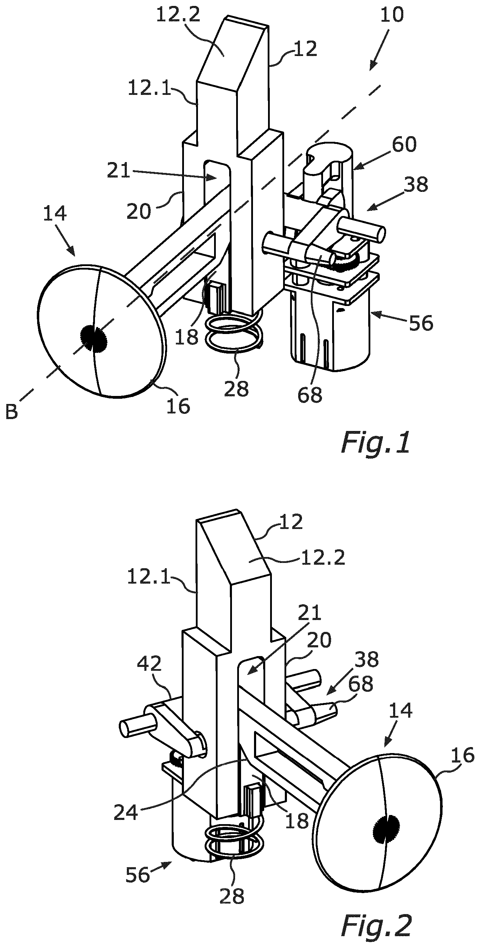

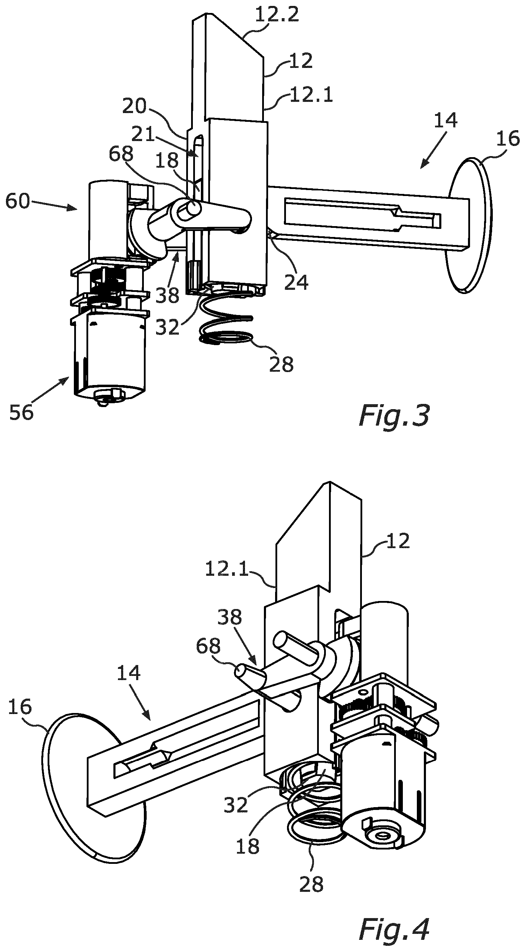

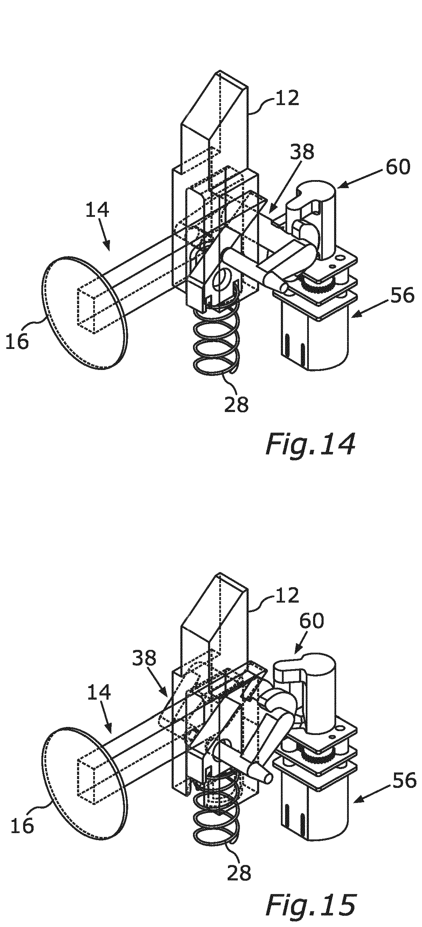

**In** Fig. 1 bis 15 ist ein Schloss 10, insbesondere für ein Elektrofahrrad und beispielsweise zum Sichern eines Energiespeichers an dem Elektrofahrrad, dargestellt. Grundsätzlich kann das Schloss jedoch auch zur Verriegelung von Türen, Fenstern, Schubladen, Transportkisten, Containern oder allgemein als Ersatz für ein mechanisches Schloss eingesetzt werden. Das Schloss 10 umfasst einen Verriegelungsmechanismus mit einem Riegel 12, welcher einen Verriegelungsabschnitt 12.1 aufweist. Der Riegel 12 ist zwischen einer in Fig. 1 dargestellten Verriegelungsposition und Entriegelungsposition bewegbar (Fig. 15). **In** der Verriegelungsposition kann der Verriegelungsabschnitt 12.1 des Riegels 12 mit einem relativ zu dem Verriegelungsmechanismus bewegbaren Gegenstück, beispielsweise den Energiespeicher (nicht gezeigt), in Eingriff gebracht werden, um dieses in dem Schloss 10 zu sichern, wobei die Entriegelungsposition die Freigabe des Gegenstücks vorgesehen ist.

Zur Bewegung des Riegels von der Verriegelungsposition in die Entriegelungsposition umfasst das Schloss 10 ein manuell betätigbares Betätigungselement 14, das in der gezeigten Ausführungsform eine Handhabe 16 in Form eines Druccknopfes umfasst. Bei einer Betätigung des Druckknopfes wird das Betätigungselement 14 entlang einer Betätigungsachse B in Richtung des Riegels verschoben.

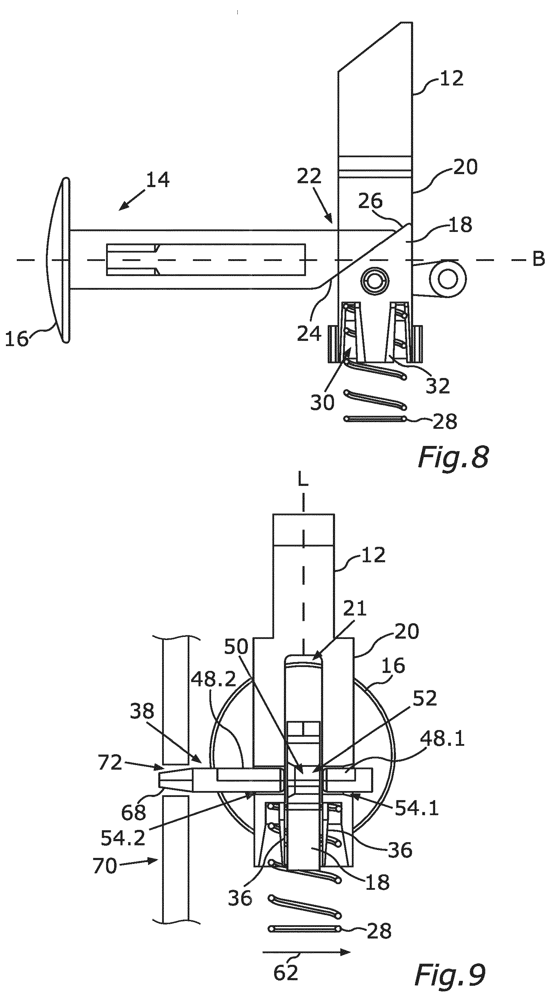

Das Betätigungselement 14 wirkt nicht unmittelbar auf den Riegel 12 ein, um diesen in die Entriegelungsposition zu bewegen. Stattdessen ist ein Koppelelement 18 vorgesehen, welches mit dem Betätigungselement 14 in Eingriff steht (Fig. 8) und durch dieses von einer Passivposition, wie sie in Fig. 1 gezeigt ist (vgl. auch Fig. 8), in eine Aktivposition, wie sie in Fig. 14, 15 gezeigt ist, bewegbar ist.

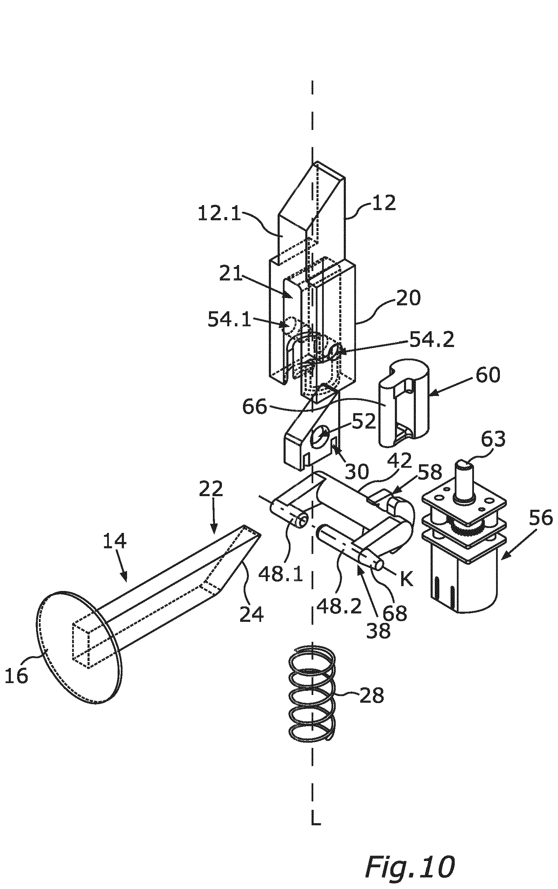

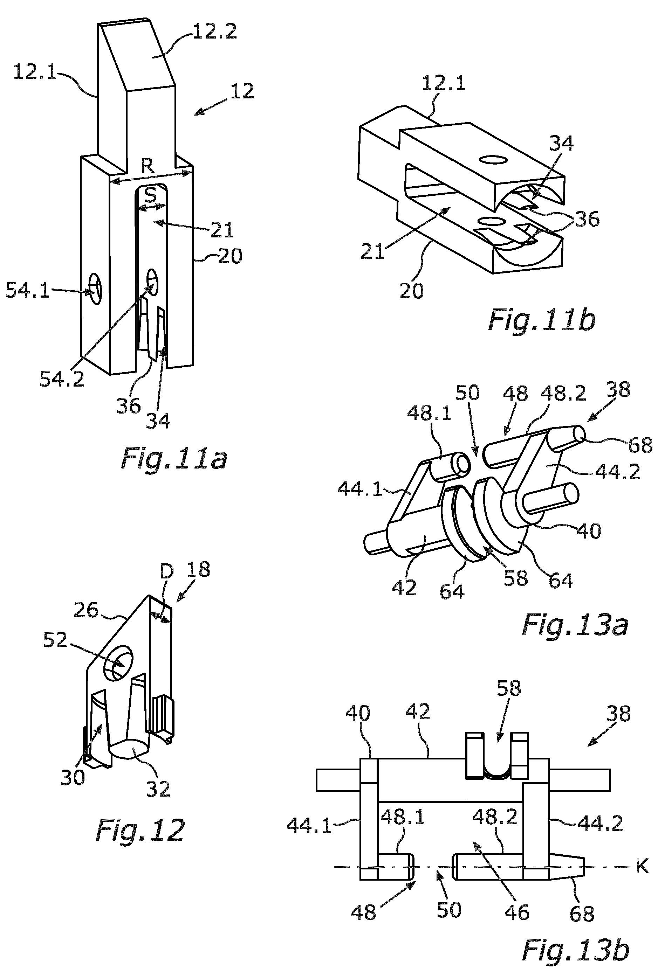

Das Koppelelement 18 ist parallel zu dem Riegel 12 bewegbar angeordnet. Der Riegel 12 und das Koppelelement 18 weisen eine gemeinsame Längsachse L auf (Fig. 10), die zugleich die Bewegungsrichtung von Riegel 12 und Koppelelement 18 definiert. Das Koppelelement 18 ist in einem durch den Riegel 12 gebildeten Führungsabschnitt 20 geführt, welcher einen zentral innerhalb des Riegels 12 ausgebildeten Führungsschacht 21 umfasst, in dem das Koppelelement 18 gleitend gelagert ist. Der Führungsschacht 21 weist eine laterale Breite S auf, die in etwa einer lateralen Ausdehnung D des Koppelelements 18 entspricht (Fig. 11A, 12).

Die Längsachse L des Riegels 12 und des Koppelelements 18 und somit deren Bewegungsrichtung ist senkrecht zu der Bewegungsrichtung des Betätigungselements 14 entlang der Betätigungsachse B orientiert. Um die Betätigungsbewegung des Betätigungselements 14 in die dazu senkrechte Riegelbewegung umzuwandeln, weist das Betätigungselement 14 einen Übertragungsabschnitt 22 auf, der eine erste schräge Steuerfläche 24 aufweist. Dazu korrespondierend weist das Koppelelement 18 eine zweite schräge Steuerfläche 26 auf, entlang derer die erste schräge Steuerfläche 24 des Betätigungselements 14 gleitend in Richtung der Betätigungsachse B bewegbar ist (Fig. 8).

Das Koppelelement 18 ist mittels einer Feder 28 bewegbar gelagert und wird beim Eindrücken des Betätigungselements 14 durch die erste schräge Steuerfläche 24 entgegen der Rückstellkraft der Feder 28 in Richtung seiner Längsachse L in seine Aktivposition gedrängt (Fig. 14). Das Koppelelement 18 weist zur Lagerung auf der Feder 28 eine Lageraussparung 30 auf, in welche die als Spiralfeder ausgebildete Feder 28 eingreifen kann. Durch einen Lagerfortsatz 32 sitzt das Koppelelement 18 stabil auf der Feder 28 (Fig. 12).

Mittels derselben Feder 28 ist der Riegel 12 gelagert, sodass er entgegen der Rückstellkraft der Feder 28 aus seiner Verriegelungsposition in die Entriegelungsposition bringbar ist. Der Riegel 12 weist an seinem dem Verriegelungsabschnitt 12.1 abgewandten Ende eine im Wesentlichen ringförmige Lageraussparung 34 zum Eingreifen der Feder 28 auf, wobei ein stabiler Sitz des Riegels auf der Feder durch zwei Lagerzungen 36 sichergestellt ist, die die ringförmige Lageraussparung 34 innenseitig abschnittsweise begrenzen (Fig. 11A, B).

Durch die Lagerung des Riegels 12 mittels der Feder 28 kann eine Fallenfunktion des Schlosses 10 realisiert werden. Das Einsetzen eines Gegenstücks in den Verriegelungsmechanismus, beispielsweise des Energiespeichers, kann bei in dem Verriegelungszustand befindlichem Riegel 12 erfolgen, da der Riegel 12 beim Einsetzen des Gegenstücks gegen die Rückstellkraft der Feder 28 zwischenzeitlich in seine Entriegelungsposition gedrückt wird. Dazu ist eine Steuerschräge 12.2 an dem Riegel vorgesehen. Ist das Gegenstück vollständig in das Schloss 10 eingesetzt, wird der Riegel 12 durch die Feder 28 automatisch in seine Verriegelungsposition gedrängt, sodass sofort ein Verlierschutz für das Gegenstück besteht.

Gemäß Fig. 1 bis Fig. 9 und Fig. 14 befindet sich das Koppelelement 18 in einem Entkopplungszustand, in welchem es relativ zu dem Riegel 12 bewegbar angeordnet ist, sodass eine Bewegung des Betätigungselements 14 und eine dadurch erzeugte Bewegung des Koppelelements 18 von der Passivposition in die Aktivposition ohne Effekt auf den Riegel 12 bleibt (Fig. 14). Um mittels des Betätigungselements 14 den Riegel 12 in seine Entriegelungsposition bewegen zu können, kann das Koppelelement 18 in einen Kopplungszustand überführt werden, in welchem es mit dem Riegel 12 gekoppelt ist. In dem Kopplungszustand wird bei einer Betätigung des Betätigungselements 14, das Koppelelement 18 in die Aktivposition überführt und der mit dem Koppelelement 18 gekoppelte Riegel 12 dabei in seine Entriegelungsposition mitgenommen (Fig. 15).

Um das Koppelelement 18 in den Kopplungszustand bzw. in den Entkopplungszustand zu überführen, ist ein Steuerelement 38 vorgesehen (Fig. 13A, B). In dem gezeigten Ausführungsbeispiel ist das Steuerelement 38 als Steuergabel 40 ausgebildet, welche neben einer Aufhängungsstrebe 42 einen ersten Zinken 44.1 und einen zweiten Zinken 44.2 umfasst. Die Steuergabel 40 umgreift den Riegel 12 an drei Seiten, wobei die durch die Steuergabel 40 umgriffene Fläche 46 in dem Verriegelungszustand des Riegels 12 bzw. in der Passivposition des Koppelelements 18 im Wesentlichen senkrecht zu der Längsachse L des Riegels orientiert ist.

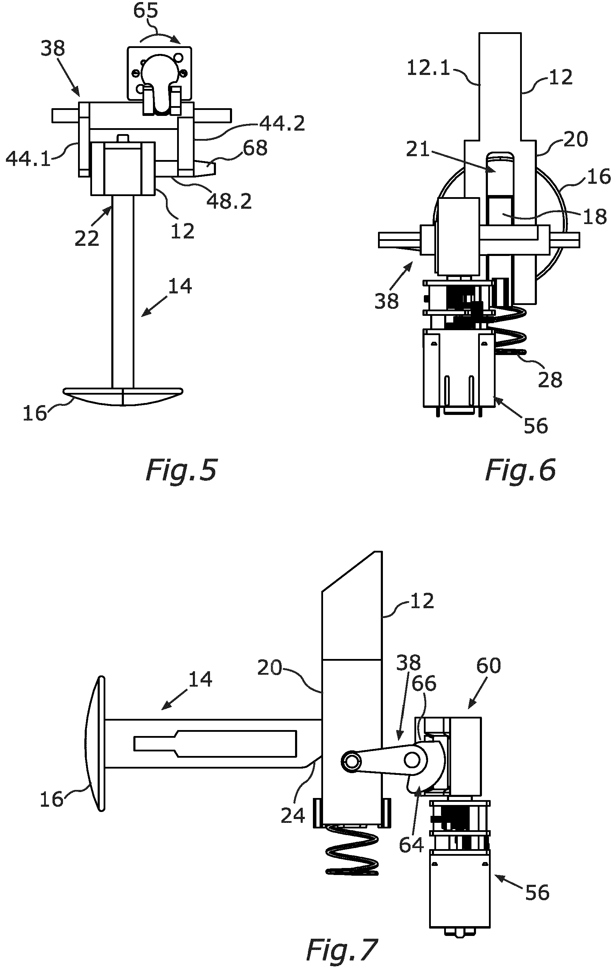

Das Steuerelement 38 weist zudem einen Kopplungsbolzen 48 auf, der sich zwischen dem ersten und zweiten Zinken 44.1, 44.2 erstreckt und dessen Längsachse K senkrecht zu den Zinken 44.1, 44.2 und zu der Bewegungsrichtung und Längsachse L des Riegels 12 und des Koppelelements 18 orientiert ist (Fig 10, 13B). Der Kopplungsbolzen 48 ist an einem der Aufhängungsstrebe 42 gegenüberliegenden Ende der Steuergabel 40 angeordnet und trifft bezüglich der Betätigungsachse B in dem montierten Schloss 10 mittig auf den Riegel 12 und das Koppelelement 18 (Fig. 2, 7).

Um das Steuerelement 38 und insbesondere den Kopplungsbolzen 48 des Steuerelements 38 aufnehmen zu können, weisen das Koppelelement 18 und der Riegel 12 jeweils entsprechende Aussparungen auf. Das Koppelelement 18 weist eine Durchtrittsöffnung 52 auf, deren Durchmesser das Hindurchtreten des Kopplungsbolzens 48 in axialer Richtung erlaubt (Fig 12). Der Riegel 12 weist eine erste Durchtrittsöffnung 54.1 und eine zweite Durchtrittsöffnung 54.2 auf, welche in Bezug auf die Längsachse K des Kopplungsbolzens 48 an gegenüberliegenden Seiten des Riegels 12 angeordnet sind. Durch die gemeinsame Lagerung des Riegels 12 und des Koppelelements 18 mittels der Feder 28 ist sichergestellt, dass in der Passivposition die Durchtrittsöffnungen 52, 54.1, 54.2 des Koppelelements 18 und des Riegels 12 fluchtend miteinander ausgerichtet sind.

Der Kopplungsbolzen 48 ist zweiteilig ausgebildet und umfasst einen ersten Kopplungsbolzenabschnitt 48.1 und einen zweiten Kopplungsbolzenabschnitt 48.2, welche durch eine Lücke 50 getrennt sind. Die Lücke 50 weist entlang der Längsachse K des Kopplungsbolzens 48 in etwa die lateralen Breite S des in dem Riegel 12 angeordneten Führungsschachts 21 auf. Das Koppelelement 18 kann daher in der Lücke 50 derart angeordnet werden, dass es nicht mit dem Kopplungsbolzen 48 in Eingriff gelangt. Dies charakterisiert gerade den Entkopplungszustand gemäß Fig. 1 bis Fig. 9 und Fig. 14 und ist in der Schnittdarstellung durch den Kopplungsbolzen 48 gemäß Fig. 9 dargestellt. Das Koppelelement 18 kann daher in dem Entkopplungszustand durch das Betätigungselement 14 unabhängig von dem Steuerelement 38 relativ zu diesem bewegt werden (Fig. 14).

In dem Entkopplungszustand gemäß Fig. 1 bis Fig. 9 und Fig. 14 steht der Riegel 12 mit dem Steuerelement 38 mittels des ersten und des zweiten Kopplungsbolzenabschnitts 48.1, 48.2, welche in die erste bzw. zweite Durchtrittsöffnung 54.1, 54.2 eingeführt sind, in Eingriff (Fig. 2, 9). Der erste Zinken 44.1 der Steuergabel 40 befindet sich nahezu in Anlage mit der Seite des Riegels 12, in welcher die erste Durchtrittsöffnung 54.1 angeordnet ist, und der erste Kopplungsbolzenabschnitt 48.1 ist vollständig in der Durchtrittsöffnung 54.1 angeordnet (Fig. 5).

Um das Koppelement 18 ausgehend von dem in Fig. 1 bis Fig. 9 und Fig. 14 gezeigten Entkopplungszustand in den Kopplungszustand - und gegebenenfalls umgekehrt - zu überführen, weist das Schloss 10 einen Elektromotor 56 auf, der mit dem Steuerelement 38 über die Aufhängungsstrebe 42 verbunden ist. Die Aufhängungsstrebe 42 weist eine Gelenkrinne 58 auf, welche im gezeigten Ausführungsbeispiel mit einem auf einer Welle 63 des Elektromotors 56 sitzenden Schwenkarm 60 gelenkig verbunden ist, wobei der Schwenkarm 60 in wohldefinierte Stellungen verschwenkt werden kann (Pfeil 65 in Fig. 5). Eine in Fig. 14 gezeigte erste Stellung des Schwenkarms 60 entspricht dem Entkopplungszustand gemäß Fig. 1 bis Fig. 9 und eine in Fig. 15 gezeigte zweite Stellung des Schwenkarms 60 dem Kopplungszustand des Koppelements 18.

Ein Verschwenken des Schwenkarms 60 von der ersten Stellung gemäß Fig. 14 in die zweite Stellung gemäß Fig. 15 führt zu einer Linearverschiebung des Steuerelements 38 entlang der Längsachse K des Kopplungsbolzens 48, wobei die Richtung 62 der Linearverschiebung in Fig. 9 durch einen Pfeil 62 gekennzeichnet ist. Durch die Linearverschiebung wird der erste Kopplungsbolzenabschnitt 48.1 aus der ersten Durchtrittsöffnung 54.1 herausgeschoben und so außer Eingriff mit dem Riegel 12 gebracht. Der zweite Kopplungsbolzenabschnitt 54.2 wird vollständig durch die zweite Durchtrittsöffnung 54.2 hindurch und in die Durchtrittsöffnung 52 des Koppelelements 18 hineingeführt. Auf diese Weise werden der Riegel 12 und das Koppelement 18 durch den Kopplungsbolzen 48 und insbesondere durch den zweiten Kopplungsbolzenabschnitt 48.2 des Steuerelements 38 miteinander gekoppelt, d.h. also das Koppelelement 18 in seinen Kopplungszustand gebracht (Fig. 15).

In diesem Kopplungszustand ist das Koppelelement 18 in Bezug auf die Bewegungsrichtung entlang der Längsachse L des Koppelelements 18 starr mit dem Riegel 12 verbunden, sodass dieser bei Betätigung des Betätigungselements 14 durch das Koppelelement 18 in seine Entriegelungsposition mitgenommen wird. Dabei wird auch der Kopplungsbolzen 48 entlang der Längsachse L des Riegels 12 mitgenommen, sodass das Steuerelement 38 rotiert wird, wobei eine Längsachse der Gelenkrinne 58 in Richtung des Riegels 12 verkippt wird (Fig. 15). Die Gelenkrinne 58 ist auf zwei Seiten von abgerundeten Wandabschnitten 64 begrenzt, zwischen denen ein Nockenabschnitt 66 des Schwenkarms 60 aufgenommen ist. Zusätzlich zu der Rotationsbewegung des Steuerelements 38 in Richtung des Riegels 12 kann auch eine Translationsbewegung des Steuerelements 38 in Richtung auf den Riegel 12 zu, insbesondere parallel zu der Betätigungsachse B, vorgesehen sein, durch welche sichergestellt ist, dass der Riegel 12 mit seinen Durchtrittsöffnungen 54.1, 54.2, das Koppelelement 18 mit seiner Durchtrittsöffnung 52 und der Kopplungsbolzen 48 bezüglich der Betätigungsachse B stets miteinander ausgerichtet sind. In der Gesamtbetrachtung wird der Kopplungsbolzen 48 des Steuerelements 38 somit effektiv parallel zu der Längsachse L des Riegels verschoben. Die Wandabschnitte 64 sind derart ausgebildet, dass sie eine sichere Führung des Steuerelements 38 während der Rotationsbewegung sowie der Translationsbewegung bieten.

Der Riegel 12 steht mit dem Steuerelement 38 nicht nur in dem Kopplungszustand, sondern auch in dem Entkopplungszustand in Eingriff (Fig. 9), wobei der Riegel 12 und das Steuerelement 38 miteinander beweglich verbunden sind. Insbesondere ist eine relative Rotation um die Längsachse K des Kopplungsbolzens 48 (Fig. 15), sowie eine relative Translation in Richtung des Pfeils 62 bzw. in umgekehrter Richtung möglich (Fig. 9).

Das Schloss 10 weist zudem ein Sperrelement 68 auf, das in dem gezeigten Ausführungsbeispiel als Sperrzapfen an dem Steuerelement 38 ausgebildet ist, der sich koaxial mit dem Kopplungsbolzen 48 von dem zweiten Zinken 44.2 zu einer Außenseite der Steuergabel 40 hin erstreckt. Das Sperrelement 68 kann zwischen einer Sperrstellung, in welcher der Riegel 12 durch das Sperrelement 68 in seiner Verriegelungsposition gesperrt ist, und einer Freigabestellung, in welcher der Riegel 12 in seine Entriegelungsposition bewegbar ist, verstellt werden. Um eine Bewegung des Riegels 12 aus seiner Verriegelungsposition heraus zu blockieren, kann das Sperrelement 68 in seiner Sperrstellung mit einer Komponente des Schlosses 10 in Eingriff stehen. Im gezeigten Ausführungsbeispiel ist vorgesehen, dass das Sperrelement 68 in der Sperrstellung mit einem nicht beweglichen Gehäuse des Schlosses 10, konkret mit einer Gehäusewand 70 in Eingriff steht (Fig. 9). In die Gehäusewand 70 ist zu diesem Zweck eine Öffnung 72 eingebracht, die das Sperrelement 68 in seinem Sperrzustand aufnimmt und eine Bewegung des Sperrelements 68 entlang der Längsachse L des Riegels 12 blockiert.

Da das Sperrelement 68 an dem Steuerelement 38 ausgebildet ist, welches mittels des Kopplungsbolzens 48 und konkret mittels des zu dem Sperrelement 68 koaxialen zweiten Kopplungsbolzenabschnitts 48.2 stets mit dem Riegel 12 verbunden ist, ist durch das Festsetzen des Sperrelements 68 in der Sperrstellung auch eine Bewegung des Riegels 12 entlang seiner Längsachse L und somit ein Bewegen in die Entriegelungsposition blockiert.

Die Verstellung des Sperrelements 68 von der Sperrstellung gemäß Fig. 9 in die Freigabestellung erfolgt mittels des Elektromotors 56. Indem dieser das Steuerelement 38 entlang der Richtung 62 linear verschiebt (Fig. 9), wird das Sperrelement 68 aus der Öffnung 72 der Gehäusewand 70 gelöst und somit eine Bewegung entlang der Längsachse L des Riegels 12 ermöglicht.

Die Bewegung des Sperrelements 68 in die Freigabestellung geht zugleich einher mit einer Überführung des Koppelelements 18 in seinen Kopplungszustand, sodass einerseits die Bewegung des Riegels 12 in die Entriegelungsposition nicht mehr durch das Sperrelement blockiert wird und andererseits eine Betätigung des Betätigungselements 14 tatsächlich ein Verstellen des Riegels 12 in die Entriegelungsposition ermöglicht.

Andererseits befindet sich gemäß der gezeigten Ausführungsform bei in Sperrstellung befindlichem Sperrelement 68 das Koppelelement 18 zugleich in seinem Entkopplungszustand. Somit wird einerseits das Betätigen des Riegels 12 mittels des Betätigungselements 14 und somit auch die Manipulierbarkeit des Schlosses 10 ausgeschlossen, während durch das Sperrelement 68 ein unbeabsichtigtes Verstellen des Riegels 12 in die Entriegelungsposition zusätzlich verhindert wird.

Es versteht sich, dass das Sperrelement 68 mit der Öffnung 72 der Gehäusewand ausgerichtet sein muss, damit das Sperrelement 68 mit der Öffnung 72 in Eingriff gebracht werden kann, d.h. also in diese einfahren kann. Mit anderen Worten setzt die Überführung des Sperrelements 68 aus der Freigabestellung zurück in die Sperrstellung voraus, dass sich der Riegel 12 in seiner Verriegelungsposition befindet. Kehrt der Riegel 12 hingegen ausgehend von seiner Entriegelungsposition nicht vollständig in seine Verriegelungsposition zurück, beispielsweise weil der zu sichernde Energiespeicher nicht korrekt eingesetzt wurde, so kann aufgrund der mangelnden Ausrichtung mit der Öffnung 72 der Gehäusewand 70 auch das mit dem Riegel 12 gekoppelte Sperrelement 68 nicht in die Öffnung 72 einfahren und folglich nicht seine Sperrstellung erreichen. Entsprechend erreicht das Koppelelement 18 in diesem Fall nicht seinen Entkopplungszustand, d.h. es wird nicht von dem Riegel 12 entkoppelt.

Da die Verlagerung des Sperrelements 68 aus der Freigabestellung zurück in die Sperrstellung mittels des Elektromotors 56 erfolgt, kann mittels des Elektromotors 56 überwacht werden, ob das Sperrelement 68 seine Sperrstellung erreicht oder nicht. Beispielsweise kann es sich bei dem Elektromotor 56 um einen Schrittmotor handeln, mit dessen Hilfe detektierbar ist, wie weit sich das Sperrelement 68 tatsächlich bewegen lässt. Alternativ kann aus einer erhöhten Leistungsaufnahme des Elektromotors 68 geschlossen werden, dass das Sperrelement 68 an der Gehäusewand 70 anstößt anstatt in die Öffnung 72 einzufahren.

Wird mittels des Elektromotors 56 festgestellt, dass das Sperrelement 68 seine Sperrstellung nicht erreichen kann und sich der Riegel 12 somit nicht in seiner Verriegelungsposition befindet, so kann an den Benutzer des Schlosses 10 eine entsprechende Warnung ausgegeben werden, damit der Benutzer den Funktionszustand des Schlosses 10 und/oder die Lage des Energiespeichers überprüfen und gegebenenfalls korrigieren kann. Konkret kann die Warnung, z.B. in Form einer optischen und/oder akustischen Rückmeldung, an einem Bordcomputer des Elektrofahrrads, an einem Mobiltelefon des Benutzers und/oder an dem Schloss 10 selbst ausgegeben werden.

### Bezugszeichenliste

- 10: Schloss
- 12: Riegel
- 12.1: Verriegelungsabschnitt
- 12.2: Steuerschräge
- 14: Betätigungselement
- 16: Handhabe
- 18: Koppelelement
- 20: Führungsabschnitt
- 21: Führungsschacht
- 22: Übertragungsabschnitt
- 24: erste schräge Steuerfläche
- 26: zweite schräge Steuerfläche
- 28: Feder
- 30: Lageraussparung des Koppelelements
- 32: Lagerfortsatz des Koppelelements
- 34: ringförmige Lageraussparung des Riegels
- 36: Lagerzungen des Riegels
- 38: Steuerelement
- 40: Steuergabel
- 42: Aufhängungsstrebe
- 44.1: erster Zinken
- 44.2: zweiter Zinken
- 46: umgriffene Fläche
- 48: Kopplungsbolzen
- 48.1: erster Kopplungsbolzenabschnitt
- 48.2: zweiter Kopplungsbolzenabschnitt
- 50: Lücke des Kopplungsbolzens
- 52: Durchtrittsöffnung des Koppelelements
- 54.1: erste Durchtrittsöffnung des Riegels
- 54.2: zweite Durchtrittsöffnung des Riegels
- 56: Elektromotor
- 58: Gelenkrinne
- 60: Schwenkarm
- 62: Richtung der Linearverschiebung des Steuerelements
- 63: Welle des Elektromotors
- 64: abgerundete Wandabschnitte der Gelenkrinne
- 65: Verschwenkrichtung des Schwenkarms
- 66: Nockenabschnitt
- 68: Sperrelement
- 70: Gehäusewand
- 72: Öffnung der Gehäusewand

- L: Längsachse des Riegels und des Koppelelements
- D: laterale Ausdehnung des Koppelelements
- S: laterale Breite des Führungsschachts
- B: Betätigungsachse des Betätigungselements
- K: Längsachse des Kopplungsbolzens

## Patentansprüche

1. Schloss (10) mit
einem Verriegelungsmechanismus, welcher einen Riegel (12) aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist,
einem Betätigungselement (14) zur manuellen Bewegung des Riegels (12) in die Entriegelungsposition und
einem Koppelelement (18), welches zwischen einem Kopplungszustand, in welchem es mit dem Riegel (12) gekoppelt ist, und einem Entkopplungszustand, in welchem es relativ zu dem Riegel (12) bewegbar ist, überführbar und mittels des Betätigungselements (14) von einer Passivposition in eine Aktivposition bewegbar ist,
wobei der Riegel (12) durch eine Bewegung des im Kopplungszustand befindlichen Koppelelements (18) von der Passivposition in die Aktivposition durch das Betätigungselement (14) in die Entriegelungsposition bewegbar ist,
**dadurch gekennzeichnet, dass** die Bewegungsrichtung des Betätigungselements (14) zumindest im Wesentlichen senkrecht zu einer Bewegungsrichtung des Riegels (12) orientiert ist.

2. Schloss (10) nach Anspruch 1,
**dadurch gekennzeichnet, dass** das Koppelelement (18) parallel zu dem Riegel (12) bewegbar angeordnet ist; und/oder
**dadurch gekennzeichnet, dass** die Bewegungsrichtung des Betätigungselements (14) zumindest im Wesentlichen senkrecht zu einer Bewegungsrichtung des Koppelelements (18) orientiert ist.

3. Schloss (10) nach Anspruch 1 oder 2,
**dadurch gekennzeichnet, dass** der Riegel (12) einen Führungsabschnitt (20) aufweist, in welchem das Koppelelement (18) geführt ist.

4. Schloss (10) nach zumindest einem der vorstehenden Ansprüche,
**gekennzeichnet durch** ein Steuerelement (38) zum wahlweisen Überführen des Koppelelements (18) in den Kopplungszustand oder Entkopplungszustand,
insbesondere wobei der Riegel (12) und das Koppelelement (18) in dem Kopplungszustand durch das Steuerelement (38) gekoppelt sind, insbesondere wobei das Steuerelement (38) als Steuergabel (40) ausgebildet ist, welche den Riegel (12) an drei Seiten umgreift, und/oder dass das Steuerelement (38) zumindest einen Kopplungsbolzen (48), insbesondere dessen Längsachse sich senkrecht zu einer Bewegungsrichtung des Riegels (12) erstreckt, zur Kopplung des Riegels (12) und des Koppelelements (18) aufweist.

5. Schloss (10) nach Anspruch 4,
wobei das Koppelelement (18) und der Riegel (12) jeweils zumindest eine Aussparung zur Aufnahme des Steuerelements (38), insbesondere eines Kopplungsbolzens (48) des Steuerelements (38), aufweisen; und/oder wobei das Steuerelement (38) und der Riegel (12) beweglich miteinander verbunden sind; und/oder
wobei eine Bewegung des Riegels (12) aus der Verriegelungsposition in die Entriegelungsposition eine Rotationsbewegung des Steuerelements (38) bewirkt.

6. Schloss (10) nach zumindest einem der vorstehenden Ansprüche,
**gekennzeichnet durch** ein Sperrelement (68), das zwischen einer Sperrstellung, in welcher der Riegel (12) in seiner Verriegelungsposition gesperrt ist, und einer Freigabestellung verstellbar ist, in welcher der Riegel (12) in seine Entriegelungsposition bewegbar ist, insbesondere wobei das Sperrelement als Stift oder Zapfen ausgebildet ist.

7. Schloss (10) nach Anspruch 4 oder 5 und 6,
**dadurch gekennzeichnet, dass** das Sperrelement (68) an dem Steuerelement (38) ausgebildet ist.

8. Schloss (10) nach Anspruch 6 oder 7,
**dadurch gekennzeichnet, dass** das Sperrelement (68) in seiner Sperrstellung mit einer Komponente des Schlosses (10) in Eingriff steht, insbesondere mit einer nicht beweglichen Komponente, wie beispielsweise einem Gehäuse (70), des Schlosses (10).

9. Schloss (10) nach zumindest einem der vorstehenden Ansprüche,
**dadurch gekennzeichnet, dass** der Riegel (12) entgegen einer Rückstellkraft einer Feder (28) aus der Verriegelungsposition in die Entriegelungsposition bringbar ist, und/oder dass das Koppelelement (18) entgegen der Rückstellkraft einer Feder (28) aus der Passivposition in die Aktivposition bringbar ist,
insbesondere wobei der Riegel (12) und das Koppelelement (18) entgegen der Rückstellkraft derselben Feder (28) in die Entriegelungsposition bzw. in die Aktivposition bringbar sind.

10. Schloss (10) nach zumindest einem der vorstehenden Ansprüche,
**dadurch gekennzeichnet, dass** das Schloss (10) zumindest einen Aktor (56) zur Überführung des Koppelelements (18) zwischen dem Kopplungszustand und dem Entkopplungszustand und/oder zur Verstellung eines Sperrelements (68) zwischen seiner Sperrstellung und seiner Freigabestellung umfasst.

11. Schloss (10) nach zumindest Anspruch 4,
**dadurch gekennzeichnet, dass** das Schloss (10) zumindest einen Aktor (56) zur Betätigung des Steuerelements (38) umfasst.

12. Schloss (10) nach zumindest einem der vorstehenden Ansprüche,
**gekennzeichnet durch** ein Detektionsmittel zur Detektion der Einnahme der Verriegelungsposition durch den Riegel (12).

13. Schloss (10) nach zumindest Anspruch 12,
**dadurch gekennzeichnet, dass** das Detektionsmittel einen Aktor (56) zur Verstellung eines Sperrelements (68) umfasst, das zwischen einer Sperrstellung, in welcher der Riegel (12) in seiner Verriegelungsposition gesperrt ist, und einer Freigabestellung verstellbar ist, in welcher der Riegel (12) in seine Entriegelungsposition bewegbar ist.

## Claims

1. A lock (10) having
a locking mechanism which has a latch (12) that is movable between a latched position, which is provided for securing a counter-piece movable relative to the locking mechanism, and an unlatched position provided for releasing the counter-piece,
an actuation element (14) for manually moving the latch (12) into the unlatched position, and
a coupling element (18) that can be transferred between a coupled state, in which it is coupled to the latch (12), and a decoupled state, in which it is movable relative to the latch (12), and that can be moved from a passive position into an active position by means of the actuation element (14),
wherein the latch (12) can be moved into the unlatched position by a movement of the coupling element (18), which is in the coupled state, from the passive position into the active position by the actuation element (14),
**characterized in that** the direction of movement of the actuation element (14) is oriented at least substantially perpendicular to a direction of movement of the latch (12).

2. A lock (10) in accordance with claim 1,
**characterized in that** the coupling element (18) is arranged movable in parallel with the latch (12); and/or
**characterized in that** the direction of movement of the actuation element (14) is oriented at least substantially perpendicular to a direction of movement of the coupling element (18).

3. A lock (10) in accordance with claim 1 or 2,
**characterized in that** the latch (12) has a guide section (20) in which the coupling element (18) is guided.

4. A lock (10) in accordance with at least one of the preceding claims, **characterized by** a control element (38) for selectively transferring the coupling element (18) into the coupled state or the decoupled state, in particular wherein the latch (12) and the coupling element (18) are coupled by the control element (38) in the coupled state,
in particular wherein the control element (38) is configured as a control fork (40) which engages around the latch (12) at three sides, and/or in that the control element (38) has at least one coupling pin (48), in particular a coupling pin (48) whose longitudinal axis extends perpendicular to a direction of movement of the latch (12), for coupling the latch (12) and the coupling element (18).

5. A lock (10) in accordance with claim 4,
wherein the coupling element (18) and the latch (12) each have at least one recess for receiving the control element (38), in particular a coupling pin (48) of the control element (38); and/or
wherein the control element (38) and the latch (12) are movably connected to one another; and/or
wherein a movement of the latch (12) from the latched position into the unlatched position brings about a rotational movement of the control element (38).

6. A lock (10) in accordance with at least one of the preceding claims, **characterized by** a blocking element (68) that is adjustable between a blocking position, in which the latch (12) is blocked in its latched position, and a release position in which the latch (12) is movable into its unlatched position, in particular with the blocking element being configured as a pin or a spigot.

7. A lock (10) in accordance with claim 4 or 5 and 6,
**characterized in that** the blocking element (68) is formed at the control element (38).

8. A lock (10) in accordance with claim 6 or 7,
**characterized in that**, in the blocking position of the blocking element (68), the blocking element (68) is in engagement with a component of the lock (10), in particular with a non-movable component, such as a housing (70), of the lock (10).

9. A lock (10) in accordance with at least one of the preceding claims, **characterized in that** the latch (12) can be brought from the latched position into the unlatched position against a return force of a spring (28), and/or **in that** the coupling element (18) can be brought from the passive position into the active position against the return force of a spring (28),
in particular wherein the latch (12) and the coupling element (18) can be brought into the unlatched position or into the active position against the return force of the same spring (28).

10. A lock (10) in accordance with at least one of the preceding claims, **characterized in that** the lock (10) comprises at least one actuator (56) for transferring the coupling element (18) between the coupled state and the decoupled state and/or for adjusting a blocking element (68) between its blocking position and its release position.

11. A lock (10) in accordance with at least claim 4,
**characterized in that** the lock (10) comprises at least one actuator (56) for actuating the control element (38).

12. A lock (10) in accordance with at least one of the preceding claims, **characterized by** a detection means for detecting the adoption of the latched position by the latch (12).

13. A lock (10) in accordance with at least claim 12,
**characterized in that** the detection means comprises an actuator (56) for adjusting a blocking element (68) that is adjustable between a blocking position, in which the latch (12) is blocked in its latched position, and a release position in which the latch (12) is movable into its unlatched position.

## Revendications

1. Serrure (10) comprenant
un mécanisme de verrouillage qui comporte un pêne (12) pouvant être déplacé entre une position de verrouillage, destinée à fixer un élément antagoniste mobile par rapport au mécanisme de verrouillage, et une position de déverrouillage, destinée à libérer l'élément antagoniste,
un élément d'actionnement (14) destiné à déplacer manuellement le pêne (12) vers la position de déverrouillage, et
un élément d'accouplement (18) qui peut être transféré entre un état d'accouplement, dans lequel il est accouplé au pêne (12), et un état de désaccouplement, dans lequel il peut être déplacé par rapport au pêne (12), et qui peut être déplacé d'une position passive vers une position active au moyen de l'élément d'actionnement (14),
le pêne (12) pouvant être déplacé vers la position de déverrouillage par l'élément d'actionnement (14) à l'aide d'un mouvement de l'élément d'accouplement (18), se trouvant dans l'état d'accouplement, de la position passive vers la position active,
**caractérisée en ce que** la direction de mouvement de l'élément d'actionnement (14) est orientée au moins sensiblement perpendiculairement à une direction de mouvement du pêne (12).

2. Serrure (10) selon la revendication 1,
**caractérisée en ce que** l'élément d'accouplement (18) est disposé de manière à pouvoir se déplacer parallèlement au pêne (12) ; et/ou
**caractérisée en ce que** la direction de mouvement de l'élément d'actionnement (14) est orientée au moins sensiblement perpendiculairement à une direction de mouvement de l'élément d'accouplement (18).

3. Serrure (10) selon la revendication 1 ou 2,
**caractérisée en ce que** le pêne (12) comporte une partie de guidage (20) dans laquelle l'élément d'accouplement (18) est guidé.

4. Serrure (10) selon l'une au moins des revendications précédentes, **caractérisée par** un élément de commande (38) destiné à transférer l'élément d'accouplement (18) sélectivement dans l'état d'accouplement ou dans l'état de désaccouplement,
en particulier, le pêne (12) et l'élément d'accouplement (18) étant accouplés dans l'état d'accouplement par l'élément de commande (38),
en particulier, l'élément de commande (38) étant réalisé sous la forme d'une fourche de commande (40) qui entoure le pêne (12) sur trois côtés, et/ou
en ce que l'élément de commande (38) comporte au moins un goujon d'accouplement (48), dont l'axe longitudinal s'étend en particulier perpendiculairement à une direction de mouvement du pêne (12), pour l'accouplement du pêne (12) et de l'élément d'accouplement (18).

5. Serrure (10) selon la revendication 4,
dans laquelle l'élément d'accouplement (18) et le pêne (12) présentent chacun au moins un évidement destiné à recevoir l'élément de commande (38), en particulier un goujon d'accouplement (48) de l'élément de commande (38) ; et/ou
l'élément de commande (38) et le pêne (12) sont reliés entre eux de manière mobile ; et/ou
un mouvement du pêne (12) de la position de verrouillage vers la position de déverrouillage provoque un mouvement de rotation de l'élément de commande (38).

6. Serrure (10) selon l'une au moins des revendications précédentes, **caractérisée par** un élément de blocage (68) qui est déplaçable entre une position de blocage, dans laquelle le pêne (12) est bloqué dans sa position de verrouillage, et une position de déblocage dans laquelle le pêne (12) peut être déplacé vers sa position de déverrouillage, en particulier, l'élément de blocage étant réalisé sous la forme d'une goupille ou d'un téton.

7. Serrure (10) selon la revendication 4 ou 5 et 6,
**caractérisée en ce que** l'élément de blocage (68) est formé sur l'élément de commande (38).

8. Serrure (10) selon la revendication 6 ou 7,
**caractérisée en ce que** l'élément de blocage (68), dans sa position de blocage, est en prise avec un composant de la serrure (10), en particulier avec un composant immobile, tel qu'un boîtier (70), de la serrure (10).

9. Serrure (10) selon l'une au moins des revendications précédentes,
**caractérisée en ce que** le pêne (12) peut être amené de la position de verrouillage vers la position de déverrouillage à l'encontre d'une force de rappel d'un ressort (28), et/ou
**en ce que** l'élément d'accouplement (18) peut être amené de la position passive vers la position active à l'encontre de la force de rappel d'un ressort (28),
en particulier, le pêne (12) et l'élément d'accouplement (18) pouvant être amenés vers la position de déverrouillage ou vers la position active à l'encontre de la force de rappel du même ressort (28).

10. Serrure (10) selon l'une au moins des revendications précédentes, **caractérisée en ce que** la serrure (10) comprend au moins un actionneur (56) destiné à transférer l'élément d'accouplement (18) entre l'état d'accouplement et l'état de désaccouplement et/ou à déplacer un élément de blocage (68) entre sa position de blocage et sa position de déblocage.

11. Serrure (10) selon au moins la revendication 4,
**caractérisée en ce que** la serrure (10) comprend au moins un actionneur (56) destiné à actionner l'élément de commande (38).

12. Serrure (10) selon l'une au moins des revendications précédentes, **caractérisée par** un moyen de détection destiné à détecter la prise de la position de verrouillage par le pêne (12).

13. Serrure (10) selon au moins la revendication 12,
**caractérisée en ce que** le moyen de détection comprend un actionneur (56) destiné à déplacer un élément de blocage (68) qui est déplaçable entre une position de blocage, dans laquelle le pêne (12) est bloqué dans sa position de verrouillage, et une position de déblocage, dans laquelle le pêne (12) peut être déplacé vers sa position de déverrouillage.
